# EUROPEAN PATENT SPECIFICATION

(11) **EP 0 466 218 B1**
(45) Date of publication and mention of the grant of the patent: **27.10.1993**
(21) Application number: 91201173.1
(22) Date of filing: 15.05.1991
(51) Int. Cl.: F16L 37/08

(54) **Locking device**
Verriegelungsvorrichtung
Dispositif de verrouillage

(30) Priority: 03.07.1990 GB 9014748
(43) Date of publication of application: 15.01.1992
(73) Proprietor: AEROSTRUCTURES HAMBLE LIMITED, Hamble-le-Rice Hants, SO3 5NF (GB)
(72) Inventor: Ware, D., Hamble, Hants S03 5NF (GB); Payne, C., Hamble, Hants S03 5NF (GB); Downes, J.G., Hamble, Hants S03 5NF (GB)
(74) Representative: Purvis, William Michael Cameron

(56) References cited:
- EP-A- 0 206 582
- EP-A- 0 360 451
- US-A- 4 823 456
- US-A- 4 836 580

## Description

This invention relates to locking devices which comprise at least one displaceable finger element.

In EP-A- 0360451 there is described and illustrated a deployment arrangement comprising two telescopically movable members which are lockable in an extended position by means of a locking claw member (see item 80 on Figures 11 to 13). This arrangement is self-locking in that it does not require a separately activated device or actuator to provide locking. In this conventional arrangement a claw finger operates as a spring.

In US-A-4 836 580 there is described and illustrated a locking device including a top annular flange having a plurality of finger portions extending axially therefrom.

We have found that for locking arrangements comprising a plurality of claw fingers extending from a common root, a large displacement of the tips of the fingers is necessary in order to allow the self-locking operation to occur.

In some applications a large displacement is unacceptable in terms of fatigue requirements. The claw fingers of conventional devices are of necessity relatively long thus rendering them unsuitable.

Accordingly the invention comprises a locking device including at least one resiliently deformable finger element characterised in that each finger element extends from a toroid-shaped body portion, the effective relative stiffnesses of the or each finger element and the toroid-shaped body portion being selected such that, in use, at least some part of any displacement of a finger element is accommodated by rotational displacement of said ring-shaped body portion which forms an elastic rotational root constraint.

An embodiment of the invention will now be described by way of example only, with reference to the drawings of which:
Figure 1 is a perspective view of a locking device in accordance with the invention; and
Figure 2 is a sectional view through a locking arrangement incorporating the locking device of Figure 1.

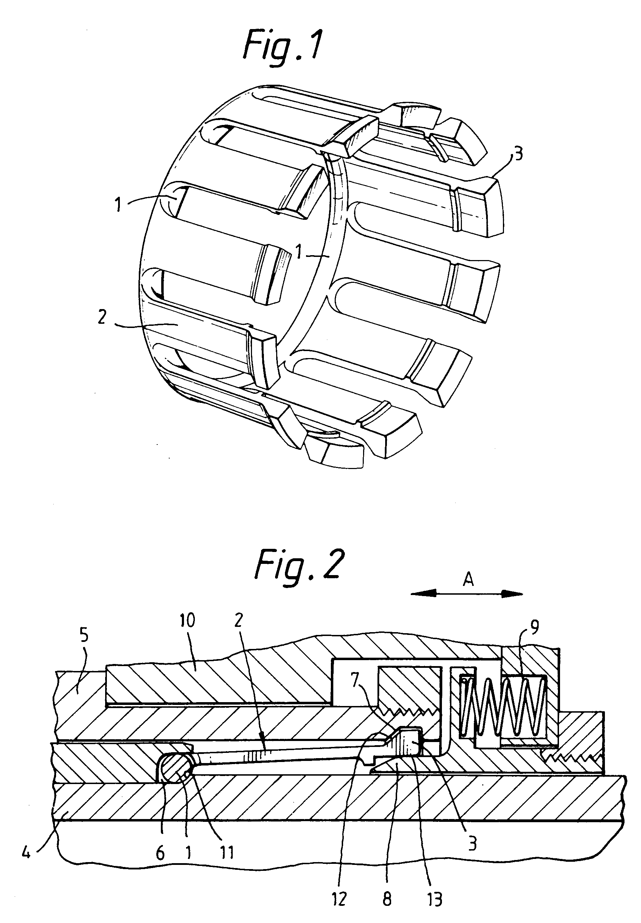

The locking device of Figure 1 consists of a ring 1 of toroidal form having a circular cross-section. Extending from the ring 1 at equally-spaced intervals are a plurality of fingers 2. Each finger 2 is flexible and incorporates a protuberance at its tip 3.

The operation of the locking device will now be described with reference to Figure 2. In this figure, an inner tube 4 and an outer tube 5 are telescopically mounted for relative axial movement in a direction of arrow "A". The inner tube 4 incorporates a recess 6 in which is located the ring 1 of the locking device. The recess 6 is of semi-circular cross-section, and prevents the axial movement of the ring. One resilient finger element 2 is shown extending from the ring 1.

When the inner 4 and outer 5 tubes are locked against relative axial movement (as in Figure 2), the tip 3 of the finger 2 is urged outwards into engagement with a shoulder 7 on the end of the outer tube 5 by a spring-loaded wedge 8. The wedge 8 and associated spring 9 are mounted on a collar 10, moveable axially with respect to the outer tube 5.

To unlock the tubes 4 and 5 from one another, the wedge 8 is withdrawn and the finger 2 returns to its rest position against the outer surface of the inner tube 4.

The flexible fingers 2 are relatively stiff, so that when their ends are displaced, the movement is accommodated by rolling (or unfurling) of the ring 1 and also by flexing of the fingers themselves. As the ring 1 rotates about its toroidal axis it moves relative to the semi-circular recess 6. That part 11 of the ring which contacts the recess 6, and those parts 12, 13 of the fingers which bear on other elements during use are coated with an abrasion resistant coating (such as carbide coating) which also reduces friction. The locking device of Figures 1 and 2 thus achieves its spring-like action by interaction between short, stiff claw fingers acting as leaf springs extending from a toroidal ring which itself acts as a rotatable ring when the free end of the fingers come under load. This both minimises the bending stress thereby giving good fatigue capability to the individual finger section, and at the same time requires a very much smaller and lighter component.

## Claims

1. A locking device including at least one resiliently deformable finger element (2) wherein the or each finger element (2) extends from a toroid-shaped body portion (1), the effective relative stiffnesses of the or each finger element (2) and the toroid-shaped body portion (1) being selected such that, in use, at least some part of any displacement of a finger element (2) is accommodated by rotational displacement of said ring-shaped body portion (1) which forms an elastic rotational root constraint.

2. A locking device according to claim 1 incorporating a multiplicity of finger elements (2) extending from the toroid-shaped body portion (1) at equi-spaced intervals generally along a notional wall of a cylinder defined by the toroid-shaped body portion (1).

3. A locking device according to either preceding claim in which the or each finger element (2) incorporates a detent (3) at its tip.

4. A locking device according to either preceding claim in which at least part of the toroid-shaped body portion (1) is coated with an abrasion-resistant substance.

5. A locking device according to any preceding claim in which at least part of the tip (3) of the or each finger element (2) is coated with an abrasion-resistant substance.

## Patentansprüche

1. Verriegelungsvorrichtung mit mindestens einem federnd verformbaren Fingerelement (2), bei der das oder jedes Fingerelement (2) sich von einem ringförmigen Körperabschnitt (1) aus erstreckt, wobei die effektiven Relativsteifigkeiten des oder jeden Fingerelementes (2) und des ringförmigen Körperabschnittes (1) derart gewählt sind, daß, in Betrieb, wenigstens ein gewisser Teil irgendeiner Verschiebung eines Fingerelementes (2) durch rotierende Verschiebung des ringförmigen Körperabschnittes (1), welcher eine elastische rotierende Ursprungsabhängigkeit bildet, ausgeglichen wird.

2. Verriegelungsvorrichtung nach Anspruch 1, die mehrere Fingerelemente (2) umfaßt, die sich von dem ringförmigen Körperabschnitt (1) in gleichmäßigen Abstanden voneinander allgemein entlang einer fiktiven Wand eines durch den ringförmigen Körperabschnittes (1) beschriebenen Zylinders erstrecken.

3. Verriegelungsvorrichtung nach einem der vorhergehenden Ansprüche, bei welcher das oder jedes Fingerelement (2) an seiner Spitze eine Feststellvorrichtung (3) hat.

4. Verriegelungsvorrichtung nach einem der vorhergehenden Ansprüche, bei welchem zumindest ein Teil des ringförmigen Körperabschnittes (1) mit einer abriebbestandigen Substanz überzogen ist.

5. Verriegelungsvorrichtung nach einem der vorhergehenden Ansprüche, bei welchem wenigstens ein Teil der Spitze (3) des oder jedes Fingerelementes (2) mit einer abriebbeständigen Substanz überzogen ist.

## Revendications

1. Dispositif de verrouillage comprenant au moins un doigt (2) déformable élastiquement dans lequel le doigt ou chaque doigt (2) s'étend depuis une portion de corps de forme torique (1), la rigidité effective relative du doigt ou de chaque doigt (2) et de la portion de corps de forme torique (1) étant sélectionnée de manière que, à l'utilisation, au moins une partie du déplacement d'un doigt (2) soit permise par la rotation de ladite portion de corps de forme torique (1) qui constitue un élément de contrainte à la base, rotatif, élastique.

2. Dispositif de verrouillage selon la revendication 1, comprenant une multitude de doigts (2) s'étendant depuis la portion de corps de forme torique (1) à des intervalles équidistants généralement le long d'une paroi fictive d'un cylindre formé par la portion de corps de forme torique (1).

3. Dispositif de verrouillage selon l'une quelconque des revendications précédentes dans lequel le doigt ou chaque doigt (2) comprend un arrêt (3) à son extrémité.

4. Dispositif de verrouillage selon l'une quelconque des revendications précédentes dans lequel au moins une partie de la portion de corps de forme torique (1) est revêtue d'une substance résistant à la corrosion.

5. Dispositif de verrouillage selon l'une quelconque des revendications précédentes dans lequel au moins une partie de l'extrémité (3) du doigt ou de chaque doigt (2) est revêtue d'une substance résistant à la corrosion.
